# EUROPÄISCHE PATENTANMELDUNG

(11) **EP 3 015 801 A1**
(43) Veröffentlichungstag der Anmeldung: **04.05.2016**
(21) Anmeldenummer: 15190779.7
(22) Anmeldetag: 21.10.2015
(51) Int. Cl.: F25D 23/02, F25D 17/04, F25D 23/08, F25D 23/10

(54) **HAUSHALTSGERÄTEVORRICHTUNG**

(30) Priorität: 29.10.2014 DE 102014222002
(71) Anmelder: BSH Hausgeräte GmbH, 81739 München (DE)
(72) Erfinder: Glaser, Benjamin, 89415 Lauingen (Donau) (DE); Kordon, Michael, 89547 Gerstetten (DE); Nickel, Manfred, 89568 Hermaringen (DE); Schlander, Ulrich, 89278 Nersingen (DE)

(57) **Zusammenfassung**

Die Erfindung geht aus von einer Haushaltsgerätevorrichtung, insbesondere einer Haushaltskältegerätevorrichtung, mit einem Geräteverschlusselement (10a - 10c), welches dazu vorgesehen ist, eine Zugangsöffnung zu verschließen, und mit einer Funktionseinheit (14a - 14c), welche in einem Nahbereich des Geräteverschlusselements (10a - 10c) angeordnet ist und welche ein Öffnungshilfselement (16a - 16c; 18a - 18c) aufweist, welches dazu vorgesehen ist, eine zu einem Öffnen des Geräteverschlusselements (10a - 10c) benötigte Öffnungskraft zu reduzieren.

Um eine Effizienz zu steigern wird vorgeschlagen, dass die Funktionseinheit (14a - 14c) dazu vorgesehen ist, zumindest eine weitere, über eine Öffnungshilfe hinausgehende, Funktion bereitzustellen.

## Beschreibung

Die Erfindung betrifft eine Haushaltsgerätevorrichtung nach dem Oberbegriff des Anspruchs 1.

Aus dem Stand der Technik sind Haushaltskältegeräte bekannt, welche einen Gerätekorpus, eine Gerätetüre, mehrere Funktionselemente sowie ein Öffnungshilfselement umfassen. Dabei ist das Öffnungshilfselement als separates Bauteil und insbesondere von den restlichen Funktionselementen getrennt ausgebildet.

Die Aufgabe der Erfindung besteht insbesondere darin, eine gattungsgemäße Vorrichtung mit verbesserten Eigenschaften hinsichtlich einer Effizienz bereitzustellen. Die Aufgabe wird durch die kennzeichnenden Merkmale des Patentanspruchs 1 gelöst, während vorteilhafte Ausgestaltungen und Weiterbildungen der Erfindung den Unteransprüchen entnommen werden können.

Die Erfindung geht aus von einer Haushaltsgerätevorrichtung, insbesondere einer Haushaltskältegerätevorrichtung, mit einem Geräteverschlusselement, welches dazu vorgesehen ist, eine Zugangsöffnung zu verschließen, und mit einer Funktionseinheit, welche in einem Nahbereich des Geräteverschlusselements angeordnet ist und welche ein Öffnungshilfselement aufweist, welches dazu vorgesehen ist, insbesondere in zumindest einem Betriebszustand, vorzugsweise bei einem Öffnungsvorgang des Geräteverschlusselements, eine zu einem Öffnen des Geräteverschlusselements benötigte Öffnungskraft zu reduzieren und/oder herabzusetzen.

Es wird vorgeschlagen, dass die Funktionseinheit dazu vorgesehen ist, zumindest eine weitere, über eine Öffnungshilfe und vorzugsweise Befestigung der Funktionseinheit hinausgehende, Funktion bereitzustellen und/oder wahrzunehmen.

Unter einer "Haushaltsgerätevorrichtung" soll in diesem Zusammenhang insbesondere zumindest ein Teil, insbesondere eine Unterbaugruppe, eines Haushaltsgeräts, insbesondere eines Haushaltskältegeräts, verstanden werden. Insbesondere kann die Haushaltsgerätevorrichtung auch das gesamte Haushaltsgerät, insbesondere das gesamte Haushaltskältegerät, umfassen. Besonders bevorzugt ist ein als Haushaltskältegerät ausgebildetes Haushaltsgerät als Kühl- und/oder Gefriergerät, wie insbesondere als Kühlschrank, Kühltruhe, Gefrierschrank, Gefriertruhe, Kühlgefrierkombination und/oder Weinlagerschrank ausgebildet. Insbesondere umfasst die Haushaltsgerätevorrichtung einen Gerätekorpus, welcher insbesondere einen Innenraum, vorzugsweise zumindest einen Nutzraum, definiert und insbesondere die Zugangsöffnung aufweist. Das Geräteverschlusselement kann insbesondere als Geräteklappe und/oder vorzugsweise als Gerätetüre ausgebildet und insbesondere schwenkbar um eine Schwenkachse, insbesondere um eine Horizontalachse und/oder vorzugsweise um eine Vertikalachse, insbesondere bezogen auf eine Aufstellposition und/oder eine Einbaulage, insbesondere relativ zu dem Gerätekorpus, gelagert sein.

Ferner soll unter einer "Funktionseinheit" insbesondere eine Einheit verstanden werden, welche zumindest ein Funktionselement, vorzugsweise zumindest zwei Funktionselemente, umfasst und dazu vorgesehen ist, in zumindest einem Betriebszustand zumindest eine, insbesondere mit dem Haushaltsgerät in Verbindung stehende, Funktion, vorzugsweise zumindest zwei, insbesondere mit dem Haushaltsgerät in Verbindung stehende Funktionen, wahrzunehmen. Insbesondere ist zumindest eines der Funktionselemente als das Öffnungshilfselement ausgebildet. Zudem weist die Funktionseinheit insbesondere zumindest ein, insbesondere ein weiteres, vorzugsweise von dem Öffnungshilfselement verschieden ausgebildetes, Funktionselement auf, welches dazu vorgesehen ist, die zumindest eine weitere, über eine Öffnungshilfe hinausgehende, Funktion wahrzunehmen. Die zumindest eine Funktion und/oder die zumindest eine weitere Funktion kann dabei eine beliebige einem Fachmann als sinnvoll erscheinende Funktion sein, wie beispielweise eine Lagerfunktion, eine Schließfunktion, insbesondere eine Schließhilfe und/oder eine Verschlussfunktion, eine Öffnungsfunktion, insbesondere eine Öffnungshilfe, eine Befestigungsfunktion, insbesondere für eine von der Funktionseinheit verschiedene Baueinheit, und/oder eine Abdeckfunktion. Insbesondere kann die Funktionseinheit auch mehrere Öffnungshilfselemente aufweisen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Nahbereich" soll in diesem Zusammenhang insbesondere ein räumlicher Bereich verstanden werden, welcher aus Punkten gebildet ist, die jeweils einen Abstand von höchstens 50 cm, vorteilhaft von höchstens 30 cm, vorzugsweise von höchstens 10 cm und besonders bevorzugt von höchstens 5 cm von einem Referenzpunkt und/oder Referenzbauteil aufweisen. Besonders bevorzugt ist die Funktionseinheit an dem Geräteverschlusselement, insbesondere mittelbar und/oder unmittelbar, befestigt. Unter einer "Öffnungskraft" soll ferner insbesondere eine Kraft verstanden werden, welche ein Benutzer und/oder Bediener, insbesondere bei einem Öffnungsvorgang des Geräteverschlusselements, benötigt und/oder aufzubringen hat, insbesondere um das Geräteverschlusselement aus einer geschlossenen Position in eine geöffnete Position zu bewegen. Unter einer "geschlossenen Position" soll in diesem Zusammenhang insbesondere eine Position, insbesondere des Geräteverschlusselements, verstanden werden, in welchem das Geräteverschlusselement insbesondere an dem Gerätekorpus anliegt und insbesondere die Zugangsöffnung, insbesondere durch das Geräteverschlusselement, zumindest teilweise unzugänglich und/oder verschlossen ist. Unter einer "geöffneten Position" soll dabei insbesondere eine Position, insbesondere des Geräteverschlusselements, verstanden werden, in welchem die Zugangsöffnung zumindest teilweise, insbesondere direkt, zugänglich ist. Insbesondere kann eine Haushaltsgerätevorrichtung auch mehrere Gerätekorpora, mehrere Geräteverschlusselemente und/oder mehrere Funktionseinheiten aufweisen.

Durch diese Ausgestaltung kann eine gattungsgemäße Vorrichtung mit verbesserten Eigenschaften hinsichtlich einer Effizienz, insbesondere einer Bauteileffizienz, einer Bauraumeffizienz, einer Zeiteffizienz und/oder einer Kosteneffizienz, bereitgestellt werden. Insbesondere kann ein Montageaufwand und/oder ein Verpackungsaufwand und somit insbesondere ein Zeitaufwand verringert werden, wodurch insbesondere Kosten reduziert werden können. Zudem kann vorteilhaft ein Bedienkomfort vorteilhaft verbessert werden, da eine benötigte Öffnungskraft des Haushaltsgeräts minimiert werden kann.

Vorzugsweise ist die Funktionseinheit einstückig ausgebildet. Insbesondere ist das Öffnungshilfselement und das zumindest eine Funktionselement, welches insbesondere dazu vorgesehen ist, die zumindest eine weitere, über eine Öffnungshilfe hinausgehende, Funktion wahrzunehmen, einstückig ausgebildet. Unter "einstückig" soll in diesem Zusammenhang insbesondere zumindest stoffschlüssig verbunden verstanden werden.

Der Stoffschluss kann beispielsweise durch einen Klebeprozess, einen Anspritzprozess, einen Schweißprozess, einen Lötprozess und/oder einen anderen, einem Fachmann als sinnvoll erscheinenden, Prozess hergestellt werden. Vorteilhaft soll unter einstückig jedoch in einem Stück geformt verstanden werden. Vorzugsweise wird dieses eine Stück aus einem einzelnen Rohling hergestellt. Die Funktionseinheit kann dabei insbesondere zumindest teilweise, vorzugsweise zu wenigstens einem Großteil und besonders bevorzugt vollständig, aus einem beliebigen einem Fachmann als sinnvoll erscheinenden Material bestehen, wie insbesondere Kunststoff und/oder Metall, insbesondere Aluminium, Stahl und/oder Edelstahl. In diesem Zusammenhang soll unter der Wendung "zu wenigstens einem Großteil" insbesondere zumindest 70 %, vorzugsweise zumindest 80 % und besonders bevorzugt zumindest 90 % verstanden werden. Hierdurch kann eine Stabilität vorteilhaft verbessert werden. Ferner kann ein Montageaufwand, insbesondere aufgrund einer reduzierten Anzahl von Bauteilen, reduziert werden.

Ferner wird vorgeschlagen, dass das Geräteverschlusselement ein, vorzugsweise elastisches, Dichtelement, insbesondere Dichtprofil, umfasst und das Öffnungshilfselement dazu vorgesehen ist, beim Öffnen des Geräteverschlusselements und/oder bei einem Öffnungsvorgang am Dichtelement anzugreifen. Vorzugsweise erstreckt sich das Dichtelement, insbesondere beidseitig, über eine gesamte Länge und/oder Breite des Geräteverschlusselements. Insbesondere ist denkbar, das Öffnungshilfselement stoffschlüssig mit dem Dichtelement zu verbinden. Vorzugsweise ist das Öffnungshilfselement jedoch dazu vorgesehen, in einem montierten Zustand in eine Vertiefung und/oder einen Spalt des Dichtelements einzugreifen. Insbesondere kann das Geräteverschlusselement auch mehrere Dichtelemente umfassen. Hierdurch kann insbesondere ein konstruktiv einfaches Öffnungshilfselement bereitgestellt werden.

Ist das Öffnungshilfselement in einem Nahbereich einer einer Schwenkachse des Geräteverschlusselements abgewandten Seite des Geräteverschlusselements angeordnet, kann insbesondere eine Wirkung des Öffnungshilfselements verbessert und eine benötige Öffnungskraft weiter reduziert werden. Vorzugsweise kann das Geräteverschlusselement zumindest ein Griffelement aufweisen, welches insbesondere dazu vorgesehen ist, von einem Benutzer und/oder einem Bediener beim Öffnen des Geräteverschlusselements und/oder bei einem Öffnungsvorgang berührt zu werden. In diesem Fall kann das Öffnungshilfselement vorzugsweise in einem Nahbereich des zumindest einen Griffelements angeordnet sein.

In einer Ausgestaltung der Erfindung wird vorgeschlagen, dass die Funktionseinheit als Anbaueinheit ausgebildet ist. Unter einer "Anbaueinheit" soll insbesondere eine Einheit verstanden werden, welche insbesondere dazu vorgesehen ist, insbesondere von einem Benutzer, insbesondere Endbenutzer und/oder Installateur, insbesondere nachträglich und insbesondere in einem zumindest im Wesentlichen montierten Zustand des Haushaltsgeräts und/oder vorzugsweise in einem Auslieferungszustand, vorzugsweise werkzeuglos und/oder unter Verwendung lediglich eines Schraubendrehers, montiert und/oder demontiert zu werden. In diesem Zusammenhang soll unter einem "zumindest im Wesentlichen montierten Zustand" insbesondere ein zumindest teilweise funktionsfähiger Zustand des Haushaltsgeräts verstanden werden. Hierdurch kann insbesondere ein zusätzlicher Montageaufwand verhindert werden. Zudem kann durch die nachträgliche Montage der Funktionseinheit insbesondere ein dauerhaftes Verformen eines Dichtelements, insbesondere bei einer längeren Lagerung, vermieden werden, wodurch insbesondere Beschädigungen und/oder Undichtigkeiten des Dichtelements verhindert werden können.

Die Funktionseinheit könnte beispielweise wenigstens teilweise und vorzugsweise vollständig mittels einer Klebeverbindung und/oder einer Schraubverbindung mit dem Geräteverschlusselement verbunden werden. Vorzugsweise umfasst die Funktionseinheit jedoch ein Rastelement und ist dazu vorgesehen, wenigstens teilweise und vorzugsweise vollständig, mittels des Rastelements mit dem Geräteverschlusselement verbunden zu werden. Unter einem "Rastelement" soll in diesem Zusammenhang insbesondere ein Rasthaken, eine Rastausnehmung und/oder eine Rastkante verstanden werden. Insbesondere kann die Funktionseinheit auch mehrere Rastelemente, insbesondere zumindest zwei, vorzugsweise zumindest drei und besonders bevorzugt zumindest vier Rastelemente, umfassen. Hierdurch kann insbesondere eine einfache und vorteilhaft schnelle Montage der Funktionseinheit erreicht werden.

Des Weiteren wird vorgeschlagen, dass die Funktionseinheit ein, insbesondere von dem Öffnungshilfselement verschieden ausgebildetes und vorzugsweise zu dem

Öffnungshilfselement identisch ausgebildetes, weiteres Öffnungshilfselement umfasst. Hierdurch kann insbesondere eine Flexibilität gesteigert werden.

In einer bevorzugten Ausgestaltung der Erfindung wird vorgeschlagen, dass eine Längserstreckung der Funktionseinheit zumindest 50 %, vorzugsweise zumindest 70 % und besonders bevorzugt zumindest 85 % einer Längserstreckung und/oder einer Breitenerstreckung des Geräteverschlusselements entspricht und das Öffnungshilfselement und das weitere Öffnungshilfselement an verschiedenen Längsenden der Funktionseinheit angeordnet sind. In diesem Zusammenhang soll unter einer "Längserstreckung" eines Objekts insbesondere eine längste Kante und/oder Seite eines kleinsten, das Objekt gerade noch umschließenden Quaders verstanden werden. Ferner soll unter einer "Breitenerstreckung" eines Objekts insbesondere eine mittlere Kante und/oder Seite eines kleinsten, das Objekt gerade noch umschließenden Quaders verstanden werden. Hierdurch kann insbesondere erreicht werden, dass bei einem Anschlagswechsel des Geräteverschlusselements eine Funktionalität der Haushaltsgerätevorrichtung erhalten bleibt.

Ferner wird vorgeschlagen, dass die Funktionseinheit eine Abdeckblende aufweist, die dazu vorgesehen ist, eine von der Funktionseinheit verschiedene Baueinheit, insbesondere ein Haushaltsgerätescharnier, insbesondere Flachscharnier und/oder Schleppscharnier, und/oder Hausmöbeljustageschrauben und/oder einen Verschlussmagneten, zumindest teilweise abzudecken. Insbesondere ist zumindest ein Funktionselement, welches insbesondere dazu vorgesehen ist, zumindest eine weitere, über eine Öffnungshilfe hinausgehende, Funktion wahrzunehmen, als Abdeckblende, insbesondere für ein Haushaltsgerätescharnier, insbesondere Flachscharnier und/oder Schleppscharnier, und/oder Hausmöbeljustageschrauben und/oder einen Verschlussmagneten, ausgebildet. Unter einer "Abdeckblende" soll dabei insbesondere ein Objekt verstanden werden, welches dazu vorgesehen ist, zumindest ein weiteres Objekt, zumindest teilweise, vorzugsweise zu wenigstens einem Großteil und besonders bevorzugt zumindest einen sichtbaren Teilabschnitt des Objekts, zu umschließen und/oder abzudecken. Insbesondere kann die Funktionseinheit auch mehrere Abdeckblenden aufweisen. Hierdurch kann insbesondere eine konstruktiv einfache Funktionseinheit bereitgestellt werden.

Vorteilhaft weist die Funktionseinheit einen Verschlussmagneten auf. Insbesondere ist zumindest ein Funktionselement, welches insbesondere dazu vorgesehen ist, zumindest eine weitere, über eine Öffnungshilfe hinausgehende, Funktion wahrzunehmen, als Verschlussmagnet ausgebildet. Unter einem "Verschlussmagnet" soll in diesem Zusammenhang insbesondere ein Magnet verstanden werden, welcher dazu vorgesehen ist, das Geräteverschlusselement, insbesondere durch eine magnetische Anziehungskraft, an den Gerätekorpus zu ziehen, wodurch insbesondere ein sicherer Verschluss des Haushaltsgeräts erreicht werden kann. Insbesondere kann die Funktionseinheit auch mehrere Verschlussmagneten aufweisen. Hierdurch kann vorteilhaft eine stabile Haushaltsgerätevorrichtung bereitgestellt werden.

Weist die Funktionseinheit ein Befestigungselement für eine von der Funktionseinheit und vorzugsweise des Geräteverschlusselements verschiedene Baueinheit, insbesondere ein Haushaltsmöbelverschlusselement und/oder vorzugsweise eine Haushaltsmöbelfront, auf, kann insbesondere ein Montageaufwand weiter reduziert werden. Ferner kann vorteilhaft sichergestellt werden, dass die Funktionseinheit von einem Benutzer am Haushaltsgerät angebracht wird und insbesondere nicht vergessen wird. Insbesondere ist zumindest ein Funktionselement, welches insbesondere dazu vorgesehen ist, zumindest eine weitere, über eine Öffnungshilfe hinausgehende, Funktion wahrzunehmen, als Befestigungselement für eine von der Funktionseinheit verschiedene Baueinheit, insbesondere ein Haushaltsmöbelverschlusselement und/oder vorzugsweise eine Haushaltsmöbelfront, ausgebildet. Insbesondere kann die Funktionseinheit auch mehrere Befestigungselemente aufweisen.

Eine besonders hohe Flexibilität kann insbesondere erreicht werden, wenn die Funktionseinheit ein Schienenelement, insbesondere Schlepptürschienenelement, aufweist, das dazu vorgesehen ist, zumindest eine von der Funktionseinheit und vorzugsweise des Geräteverschlusselements verschiedene Baueinheit, insbesondere ein Haushaltsmöbelverschlusselement, beweglich zu lagern. Insbesondere ist zumindest ein Funktionselement, welches insbesondere dazu vorgesehen ist, zumindest eine weitere, über eine Öffnungshilfe hinausgehende, Funktion wahrzunehmen, als Schienenelement, insbesondere Schlepptürschienenelement, ausgebildet. Insbesondere kann die Funktionseinheit auch mehrere Schienenelemente, insbesondere Schlepptürschienenelemente, aufweisen.

Die Haushaltsgerätevorrichtung soll hierbei nicht auf die oben beschriebene Anwendung und Ausführungsform beschränkt sein. Insbesondere kann die Haushaltsgerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein als Haushaltskältegerät ausgebildetes Haushaltsgerät mit einer Haushaltsgerätevorrichtung in einer perspektivischen Frontansicht,
- Fig. 2: eine Funktionseinheit der Haushaltsgerätevorrichtung in einer perspektivischen Ansicht,
- Fig. 3: eine Seitenansicht auf ein Längsende der Funktionseinheit,
- Fig. 4: die Funktionseinheit in einem montierten Zustand,
- Fig. 5: eine Funktionseinheit einer weiteren Haushaltsgerätevorrichtung in einem montierten Zustand in einer perspektivischen Rückansicht,
- Fig. 6: die Funktionseinheit aus Figur 5 in einer perspektivischen Frontansicht,
- Fig. 7: eine Funktionseinheit einer weiteren Haushaltsgerätevorrichtung in einem montierten Zustand in einer perspektivischen Rückansicht und
- Fig. 8: die Funktionseinheit aus Figur 7 in einer perspektivischen Frontansicht.

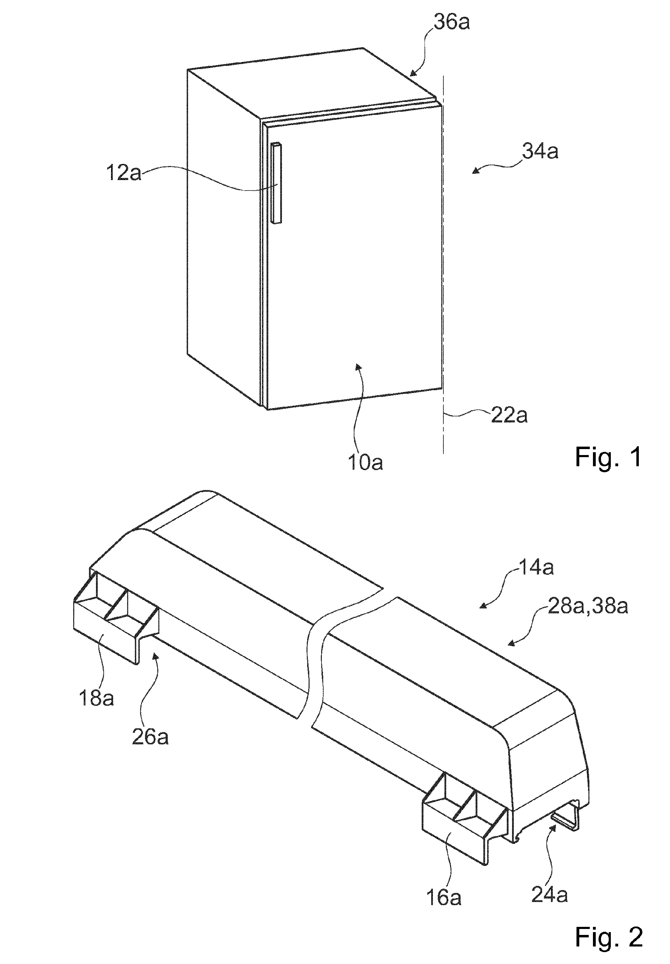

Figur 1 zeigt ein beispielhaftes als Haushaltskältegerät ausgebildetes Haushaltsgerät 34a in einer perspektivischen Frontansicht. Im vorliegenden Fall ist das Haushaltsgerät 34a als Einbaugerät ausgebildet. Demnach ist das Haushaltsgerät 34a in einem montierten Zustand in ein Haushaltsmöbel eingebaut. Alternativ ist jedoch auch denkbar, ein Haushaltsgerät als Standgerät auszubilden.

Das Haushaltsgerät 34a umfasst ferner eine Haushaltsgerätevorrichtung. Die Haushaltsgerätevorrichtung ist auf bekannte Art und Weise dazu vorgesehen, Lebensmittel und andere Kühlgüter zu kühlen. Dazu umfasst die Haushaltsgerätevorrichtung einen Gerätekorpus 36a. Der Gerätekorpus 36a definiert einen Innenraum (nicht dargestellt). Der Innenraum weist im vorliegenden Fall genau einen Nutzraum auf. Der Nutzraum weist eine Zugangsöffnung auf. Der Nutzraum ist als Kühlraum ausgebildet. Der Nutzraum ist im vorliegenden Fall als Gefrierraum ausgebildet.

Zudem umfasst die Haushaltsgerätevorrichtung ein Geräteverschlusselement 10a. Das Geräteverschlusselement 10a ist als Gerätetüre ausgebildet. Das Geräteverschlusselement 10a ist schwenkbar um eine Schwenkachse 22a gelagert. Die Schwenkachse 22a ist vertikal ausgerichtet. Das Geräteverschlusselement 10a ist dazu vorgesehen, die Zugangsöffnung des Nutzraums zu verschließen. Zudem weist das Geräteverschlusselement 10a ein Griffelement 12a auf. Das Griffelement 12a ist auf einer der Schwenkachse 22a abgewandten Seite des Geräteverschlusselements 10a angeordnet. Das Griffelement 12a ist im vorliegenden Fall zumindest im Wesentlichen quaderförmig ausgebildet. Das Griffelement 12a ist dazu vorgesehen, von einem Benutzer bei einem Öffnungsvorgang berührt zu werden. Alternativ ist denkbar, zumindest ein Geräteverschlusselement als Geräteklappe auszubilden. Ferner ist denkbar, dass eine Haushaltsgerätevorrichtung mehrere Geräteverschlusselemente und/oder Nutzräume umfasst. Alternativ ist auch denkbar, ein Griffelement zumindest im Wesentlichen rund und/oder als Vertiefung auszubilden. Ferner ist denkbar ein Griffelement, insbesondere vollständig, in ein Geräteverschlusselement zu integrieren, sodass das Griffelement insbesondere außerhalb eines Sichtbereichs eines Benutzers angeordnet ist.

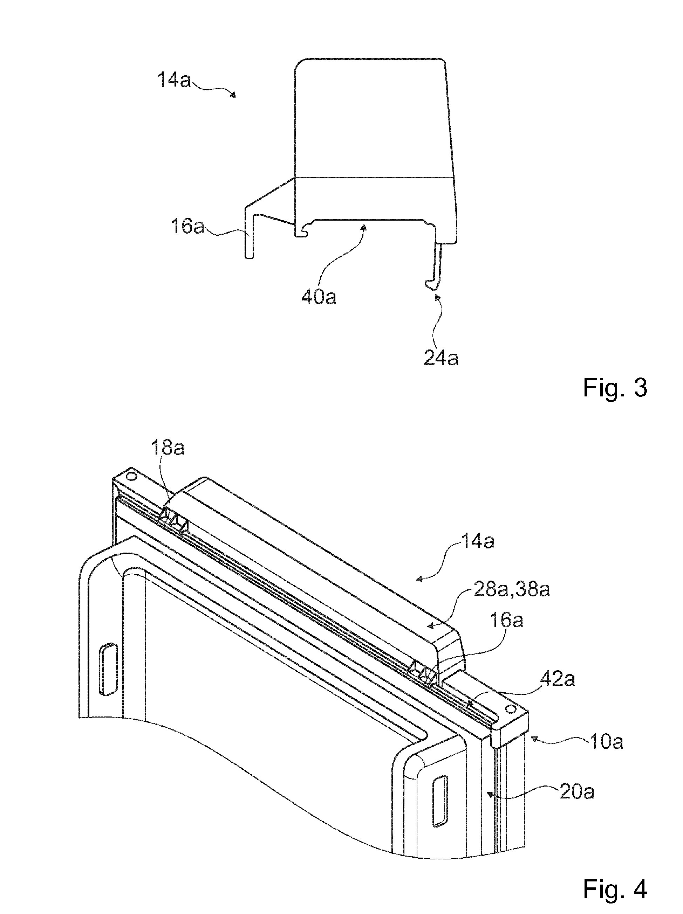

Ferner umfasst das Geräteverschlusselement 10a ein elastisches Dichtelement 20a (vgl. Figur 4). Das Dichtelement 20a ist als Dichtprofil ausgebildet. Das Dichtelement 20a erstreckt sich beidseitig über eine gesamte Länge und Breite des Geräteverschlusselements 10a. Das Dichtelement 20a weist dabei zumindest eine Vertiefung 42a auf. Das Dichtelement 20a ist dazu vorgesehen, den Nutzraum in einem geschlossenen Zustand und/oder einer geschlossenen Position des Geräteverschlusselements 10a abzudichten.

Zudem umfasst die Haushaltsgerätevorrichtung eine Funktionseinheit 14a (vgl. Figur 2). Die Funktionseinheit 14a ist einstückig ausgebildet. Im vorliegenden Fall ist die Funktionseinheit 14a in einem Spritzgussverfahren hergestellt. Die Funktionseinheit 14a besteht aus Kunststoff.

Die Funktionseinheit 14a umfasst zumindest ein Funktionselement 16a, 18a, 24a, 26a, 38a. Ein erstes Funktionselement 38a ist zumindest im Wesentlichen quaderförmig ausgebildet. Das erste Funktionselement 38a ist in einer Seitenansicht zumindest im Wesentlichen rechteckig ausgebildet (vgl. Figur 3). Das erste Funktionselement 38a ist hohl ausgebildet. Demzufolge weist das erste Funktionselement 38a, insbesondere auf einer dem Geräteverschlusselement 10a zugewandten Seite, eine Öffnung 40a auf. Das erste Funktionselement 38a ist im vorliegenden Fall als Abdeckblende 28a ausgebildet.

Die Funktionseinheit 14a umfasst ferner zumindest ein als Öffnungshilfselement 16a, 18a ausgebildetes Funktionselement. Im vorliegenden Fall umfasst die Funktionseinheit 14a zwei Öffnungshilfselemente 16a, 18a. Die Öffnungshilfselemente 16a, 18a sind zueinander identisch. Die Öffnungshilfselemente 16a, 18a sind als Geräteverschlusselementöffnungshilfselemente ausgebildet. Die Öffnungshilfselemente 16a, 18a sind in einer Seitenansicht zumindest im Wesentlichen L-förmig ausgebildet (vgl. Figur 3). Die Öffnungshilfselemente 16a, 18a sind in einem Nahbereich der Öffnung 40a angeordnet. Die Öffnungshilfselemente 16a, 18a sind in einem dem Geräteverschlusselement 10a zugewandten Bereich der Funktionseinheit 14a angeordnet. Die Öffnungshilfselemente 16a, 18a sind an verschiedenen Längsenden der Funktionseinheit 14a angeordnet.

Zudem umfasst die Funktionseinheit 14a zumindest ein als Rastelement 24a, 26a ausgebildetes Funktionselement. Im vorliegenden Fall umfasst die Funktionseinheit 14a zwei Rastelemente 24a, 26a. Die Rastelemente 24a, 26a sind zueinander identisch. Die Rastelemente 24a, 26a sind in einem Nahbereich der Öffnung 40a angeordnet. Die Rastelemente 24a, 26a sind in einem dem Geräteverschlusselement 10a zugewandten Bereich der Funktionseinheit 14a angeordnet. Die Rastelemente 24a, 26a sind an verschiedenen Längsenden der Funktionseinheit 14a angeordnet. Zudem sind die Rastelemente 24a, 26a zu den Öffnungshilfselementen 16a, 18a zumindest im Wesentlichen gegenüberliegend angeordnet. Die Rastelemente 24a, 26a sind im vorliegenden Fall als Rasthaken ausgebildet.

Alternativ ist denkbar, dass eine Funktionseinheit eine andere Anzahl von Funktionselementen, Öffnungshilfselementen und/oder Rastelementen, insbesondere zumindest zwei, zumindest drei und/oder zumindest vier Funktionselemente, Öffnungshilfselemente und/oder Rastelemente aufweist. Ferner könnte eine Funktionseinheit andere als Befestigungsmittel ausgebildete Funktionselemente, insbesondere von Rastelementen verschieden ausgebildete Befestigungsmittel, wie beispielweise Schraubverbindungselemente, aufweisen. Zudem könnte eine Funktionseinheit, insbesondere vollständig, frei von Befestigungsmitteln sein. Zudem kann eine Funktionseinheit andere einem Fachmann als sinnvoll erscheinende Funktionselemente aufweisen, wie beispielsweise zumindest ein Teil eines Haushaltsgerätescharniers und/oder ein Haushaltsgerätescharnier, insbesondere Flachscharnier und/oder Schleppscharnier, und/oder zumindest einen Verschlussmagneten und/oder zumindest eine Hausmöbeljustageschraube, an welchen insbesondere zumindest ein Öffnungshilfselement angeordnet sein kann.

Figur 4 zeigt die Funktionseinheit 14a in einem montierten Zustand. In diesem Fall wurde der Gerätekorpus 36a der Übersichtlichkeit halber entfernt. Die Funktionseinheit 14a ist als Anbaueinheit ausgebildet. Die Funktionseinheit 14a weist ferner die Abdecklende 28a auf. Die Funktionseinheit 14a ist im vorliegenden Fall dazu vorgesehen, einen an dem Geräteverschlusselement 10a montierten Verschlussmagneten (nicht dargestellt) vollständig abzudecken. Demzufolge ist die Funktionseinheit 14a dazu vorgesehen, eine über eine Öffnungshilfe hinausgehende Funktion bereitzustellen.

Die Funktionseinheit 14a ist an dem Geräteverschlusselement 10a befestigt. Die Funktionseinheit 14a ist dabei in einem oberen Bereich, insbesondere bezogen auf eine Einbaulage, des Geräteverschlusselements 10a angeordnet. Im vorliegenden Fall ist die Funktionseinheit 14a an einer oberen Kante des Geräteverschlusselements 10a angeordnet. Dabei umgreift die Funktionseinheit 14a die obere Kante des Geräteverschlusselements 10a. Die Funktionseinheit 14a erstreckt sich über etwa 80 % einer Breite des Geräteverschlusselements 10a. Im vorliegenden Fall entspricht eine Längserstreckung der Funktionseinheit 14a etwa 80 % einer Breitenerstreckung des Geräteverschlusselements 10a. Ferner ist ein erstes Öffnungshilfselement 16a der Öffnungshilfselemente 16a, 18a in einem Nahbereich einer der Schwenkachse 22a abgewandten Seite des Geräteverschlusselements 10a angeordnet. Das erste Öffnungshilfselement 16a ist im vorliegenden Fall in einem Nahbereich des Griffelements 12a angeordnet. Ein zweites Öffnungshilfselement 18a der Öffnungshilfselemente 16a, 18a ist in einem Nahbereich einer der Schwenkachse 22a zugewandten Seite des Geräteverschlusselements 10a angeordnet. Hierdurch kann eine Funktionalität der Haushaltsgerätevorrichtung auch bei einem möglichen Anschlagswechsel des Geräteverschlusselements erhalten bleiben. Alternativ ist jedoch auch denkbar auf ein erstes Öffnungshilfselement oder ein zweites Öffnungshilfselement zu verzichten. Vorzugsweise befindet sich in diesem Fall jedoch das zumindest eine Öffnungshilfselement in einem Nahbereich einer einer Schwenkachse abgewandten Seite eines Geräteverschlusselements.

Die Funktionseinheit 14a ist in dem montierten Zustand mittels der Rastelemente 24a, 26a mit dem Geräteverschlusselement 10a verbunden. Die Rastelemente 24a, 26a sind dabei auf einer der Zugangsöffnung und/oder dem Nutzraum abgewandten Seite des Geräteverschlusselements 10a angeordnet. Die Öffnungshilfselemente 16a, 18a sind auf einer der Zugangsöffnung und/oder dem Nutzraum zugewandten Seite des Geräteverschlusselements 10a angeordnet.

Die Öffnungshilfselemente 16a, 18a greifen in dem montierten Zustand in die Vertiefung 42a des Dichtelements 20a ein. Die Öffnungshilfselemente 16a, 18a, insbesondere das erste Öffnungshilfselement 16a, sind dabei dazu vorgesehen, beim Öffnen des Geräteverschlusselements 10a am Dichtelement 20a anzugreifen und das Dichtelement 20a insbesondere in einem Bereich der Öffnungshilfselemente 16a, 18 partiell anzuheben. Somit sind die Öffnungshilfselemente 16a, 18a dazu vorgesehen, beim Öffnen des Geräteverschlusselements 10a zwischen dem Dichtelement 20a und dem Gerätekorpus 36a einen Luftspalt zu erzeugen, wodurch sich insbesondere ein Druckausgleich zwischen dem Innenraum des Haushaltsgeräts 34a und einer Umgebung ergibt und sich eine benötige Öffnungskraft reduziert. Hierdurch kann insbesondere bei Haushaltskältegeräten, in welchen sich ein Unterdruck aufbauen kann, insbesondere aufgrund eingeschlossener warmer Luftmengen, ein Öffnen erleichtert und insbesondere ein Bedienkomfort erhöht werden.

Auch ist denkbar, eine Funktionseinheit an einem Haushaltsgerätescharnier und/oder einem Haushaltsmöbel, insbesondere einem Haushaltsmöbelverschlusselement, vorzugsweise einer Haushaltsmöbeltüre und/oder einer Haushaltsmöbelfront, zu befestigen. Ferner ist denkbar, eine Funktionseinheit an einem unteren Bereich und/oder an einem seitlichen Bereich eines Geräteverschlusselements anzuordnen. Auch könnte zumindest ein Öffnungshilfselement, insbesondere unmittelbar, an einem Verschlussmagneten, welcher insbesondere als Funktionselement ausgebildet ist, angeordnet sein. In diesem Fall wäre denkbar, in einer Abdeckblende zumindest eine Aussparung vorzusehen.

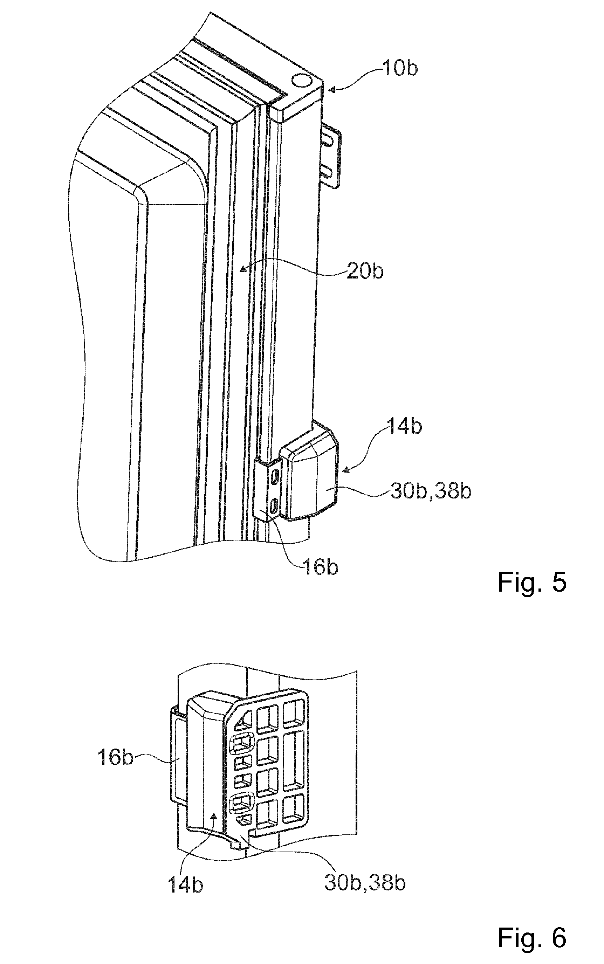

In den Figuren 5 bis 8 sind weitere Ausführungsbeispiele der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung des anderen Ausführungsbeispiels, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 8 ist der Buchstabe a durch die Buchstaben b und c ersetzt.

In den Figuren 5 und 6 ist ein weiteres Ausführungsbeispiel der Erfindung gezeigt. Dem Ausführungsbeispiel der Figuren 5 und 6 ist der Buchstabe b nachgestellt. Das weitere Ausführungsbeispiel der Figuren 5 und 6 unterscheidet sich von dem vorherigen Ausführungsbeispiel zumindest im Wesentlichen durch eine Funktionseinheit 14b eines Haushaltsgeräts 34b.

Im vorliegenden Fall weist das Haushaltsgerät 34b ein Flachscharnier auf und ist somit insbesondere als Haushaltsgerät mit Flachscharniertechnik ausgebildet. Die Funktionseinheit 14b ist im vorliegenden Fall in einem seitlichen Bereich, insbesondere bezogen auf eine Einbaulage, eines Geräteverschlusselements 10b angeordnet. Die Funktionseinheit 14b ist dabei in einem Nahbereich einer einer Schwenkachse 22b abgewandten Seite des Geräteverschlusselements 10b angeordnet. Die Funktionseinheit 14b ist an einer seitlichen Kante des Geräteverschlusselements 10b angeordnet. Dabei umgreift die Funktionseinheit 14b die seitliche Kante des Geräteverschlusselements 10b.

Die Funktionseinheit 14b umfasst ein erstes Funktionselement 38b. Das erste Funktionselement 38b ist im vorliegenden Fall als Befestigungselement 30b ausgebildet. Somit weist die Funktionseinheit 14b ein Befestigungselement 30b zur Befestigung einer Haushaltsmöbelfront (nicht dargestellt) auf. Hierdurch kann die Hausmöbelfront mittelbar mit einem Geräteverschlusselement 10b verbunden werden. Zudem umfasst die Funktionseinheit 14b im vorliegenden Fall genau ein Öffnungshilfselement 16b. Alternativ ist jedoch auch denkbar, dass eine Funktionseinheit eine andere Anzahl von Öffnungshilfselementen aufweist.

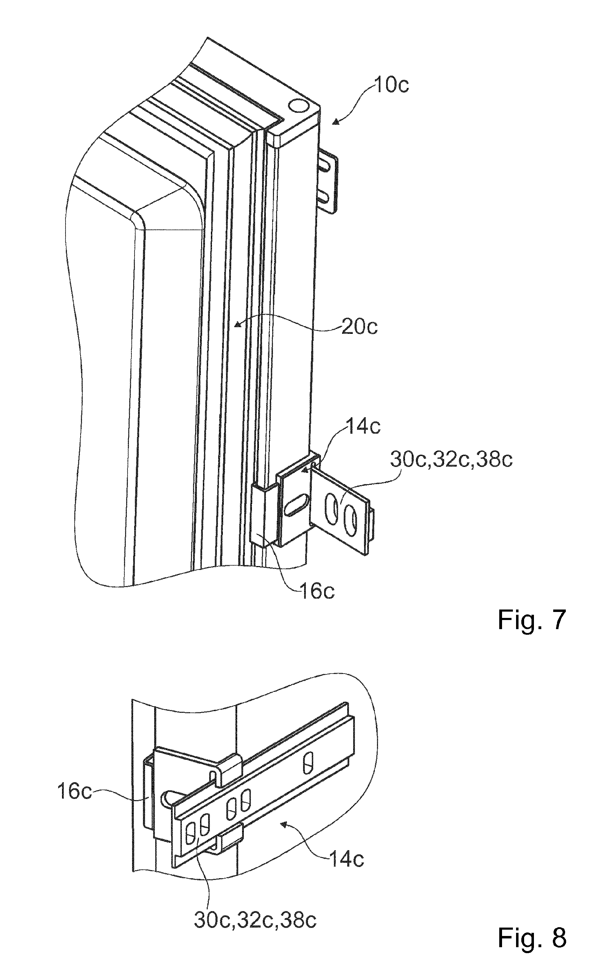

In den Figuren 7 und 8 ist ein weiteres Ausführungsbeispiel der Erfindung gezeigt. Dem Ausführungsbeispiel der Figuren 7 und 8 ist der Buchstabe c nachgestellt. Das weitere Ausführungsbeispiel der Figuren 7 und 8 unterscheidet sich von dem vorherigen Ausführungsbeispiel zumindest im Wesentlichen durch eine Funktionseinheit 14c eines Haushaltsgeräts 34c.

Im vorliegenden Fall weist das Haushaltsgerät 34c ein Schleppscharnier auf und ist somit insbesondere als Haushaltsgerät mit Schleppscharniertechnik ausgebildet. Die Funktionseinheit 14c besteht aus Metall. Die Funktionseinheit 14c umfasst ein erstes Funktionselement 38c. Das erste Funktionselement 38c ist im vorliegenden Fall als Befestigungselement 30c ausgebildet. Zudem ist das erste Funktionselement 38c als Schlepptürschienenelement ausgebildet. Somit weist die Funktionseinheit 14c ein Schienenelement 32c zur beweglichen Befestigung eines Haushaltsmöbelverschlusselements (nicht dargestellt) auf.

### Bezugszeichen

- 10: Geräteverschlusselement
- 12: Griffelement
- 14: Funktionseinheit
- 16: Öffnungshilfselement
- 18: Öffnungshilfselement
- 20: Dichtelement
- 22: Schwenkachse
- 24: Rastelement
- 26: Rastelement
- 28: Abdeckblende
- 30: Befestigungselement
- 32: Schienenelement
- 34: Haushaltsgerät
- 36: Gerätekorpus
- 38: Funktionselement
- 40: Öffnung
- 42: Vertiefung

## Patentansprüche

1. Haushaltsgerätevorrichtung, insbesondere Haushaltskältegerätevorrichtung, mit einem Geräteverschlusselement (10a - 10c), welches dazu vorgesehen ist, eine Zugangsöffnung zu verschließen, und mit einer Funktionseinheit (14a - 14c), welche in einem Nahbereich des Geräteverschlusselements (10a - 10c) angeordnet ist und welche ein Öffnungshilfselement (16a - 16c; 18a - 18c) aufweist, welches dazu vorgesehen ist, eine zu einem Öffnen des Geräteverschlusselements (10a - 10c) benötigte Öffnungskraft zu reduzieren, **dadurch gekennzeichnet, dass** die Funktionseinheit (14a - 14c) dazu vorgesehen ist, zumindest eine weitere, über eine Öffnungshilfe hinausgehende, Funktion bereitzustellen.

2. Haushaltsgerätevorrichtung nach Anspruch 1, **dadurch gekennzeichnet, dass** die Funktionseinheit (14a - 14c) einstückig ausgebildet ist.

3. Haushaltsgerätevorrichtung nach einem der vorhergehenden Ansprüche, **dadurch gekennzeichnet, dass** das Geräteverschlusselement (10a - 10c) ein Dichtelement (20a - 20c) umfasst und das Öffnungshilfselement (16a - 16c) dazu vorgesehen ist, beim Öffnen des Geräteverschlusselements (10a - 10c) am Dichtelement (20a - 20c) anzugreifen.

4. Haushaltsgerätevorrichtung nach einem der vorhergehenden Ansprüche, **dadurch gekennzeichnet, dass** das Öffnungshilfselement (16a - 16c; 18a - 18c) in einem Nahbereich einer einer Schwenkachse (22a - 22c) des Geräteverschlusselements (10a - 10c) abgewandten Seite des Geräteverschlusselements (10a - 10c) angeordnet ist.

5. Haushaltsgerätevorrichtung nach einem der vorhergehenden Ansprüche, **dadurch gekennzeichnet, dass** die Funktionseinheit (14a - 14c) als Anbaueinheit ausgebildet ist.

6. Haushaltsgerätevorrichtung nach einem der vorhergehenden Ansprüche, **dadurch gekennzeichnet, dass** die Funktionseinheit (14a - 14c) ein Rastelement (24a - 24c; 26a - 26c) umfasst und dazu vorgesehen ist, wenigstens teilweise mittels des Rastelements (24a - 24c; 26a - 26c) mit dem Geräteverschlusselement (10a - 10c) verbunden zu werden.

7. Haushaltsgerätevorrichtung nach einem der vorhergehenden Ansprüche, **dadurch gekennzeichnet, dass** die Funktionseinheit (14a) ein weiteres Öffnungshilfselement (16a, 18a) umfasst.

8. Haushaltsgerätevorrichtung nach Anspruch 7, **dadurch gekennzeichnet, dass** eine Längserstreckung der Funktionseinheit (14a) zumindest 50% einer Längserstreckung und/oder einer Breitenerstreckung des Geräteverschlusselements (10a) entspricht und das Öffnungshilfselement (16a, 18a) und das weitere Öffnungshilfselement (16a, 18a) an verschiedenen Längsenden der Funktionseinheit (14a) angeordnet sind.

9. Haushaltsgerätevorrichtung nach einem der vorhergehenden Ansprüche, **dadurch gekennzeichnet, dass** die Funktionseinheit (14a) eine Abdeckblende (28a) aufweist, die dazu vorgesehen ist, eine von der Funktionseinheit (14b; 14c) verschiedene Baueinheit zumindest teilweise abzudecken.

10. Haushaltsgerätevorrichtung nach einem der vorhergehenden Ansprüche, **dadurch gekennzeichnet, dass** die Funktionseinheit (14b; 14c) ein Befestigungselement (30b; 30c) für eine von der Funktionseinheit (14b; 14c) verschiedene Baueinheit aufweist.

11. Haushaltsgerätevorrichtung nach einem der vorhergehenden Ansprüche, **dadurch gekennzeichnet, dass** die Funktionseinheit (14c) ein Schienenelement (32c) aufweist, das dazu vorgesehen ist, zumindest eine von der Funktionseinheit (14b; 14c) verschiedene Baueinheit beweglich zu lagern.

12. Haushaltsgerät, insbesondere Haushaltskältegerät, mit einer Haushaltsgerätevorrichtung nach einem der vorhergehenden Ansprüche.
